# EUROPÄISCHE PATENTANMELDUNG

(11) **EP 4 606 477 A1**
(43) Veröffentlichungstag der Anmeldung: **27.08.2025**
(21) Anmeldenummer: 24158670.0
(22) Anmeldetag: 20.02.2024
(51) Int. Cl.: B01L 3/00, G01N 21/00, G01N 35/00, B01L 3/02

(54) **VORRICHTUNG MIT EINER WASCHSTATION ZUM REINIGEN VON MIKROPLATTEN SOWIE REINIGUNGSVERFAHREN**

(71) Anmelder: BERTHOLD TECHNOLOGIES GmbH & Co. KG, 75323 Bad Wildbad (DE)
(72) Erfinder: FUCHS, Nicole, 75328 Schömberg (DE); KLAIBER, Norbert, 75337 Enzklösterle (DE)
(74) Vertreter: Patentanwälte Ruff, Wilhelm, Beier, Dauster & Partner mbB

(57) **Zusammenfassung**

Eine Vorrichtung (100) mit einer Waschstation (200) zum Reinigen von Mikroplatten (170) umfasst eine Vorrichtungsbasis (110), eine Waschstation (200) mit einem von der Vorrichtungsbasis (110) getragenen Waschkopf (210), der eine Vielzahl von Werkzeugeinheiten (220) mit jeweils einer Dispensierspitze (222) zur Abgabe einer Reinigungsflüssigkeit in ein Näpfchen (172) einer Mikroplatte (170) und einer Ansaugspitze (225) zum Ansaugen von Reinigungsflüssigkeit aus dem Näpfchen trägt; eine Arbeitsstation (300) mit von der Vorrichtungsbasis (100) getragenen Einrichtungen zur Handhabung oder Behandlung wenigstens einer Mikroplatte; und ein Transportsystem (150) mit von der Vorrichtungsbasis (110) getragenen Einrichtungen zum Transportieren einer Mikroplatte entlang einer Transportstrecke (157) zwischen der Waschstation (200) und der Arbeitsstation (300). Weiterhin ist eine Flüssigkeitsmengen-Messeinrichtung (400) mit wenigstens einer Messeinheit (410) vorgesehen, die an der Transportstrecke (157) zwischen der Waschstation (200) und der Arbeitsstation (300) derart positioniert oder positionierbar ist, dass ein Näpfchen (172) im Erfassungsbereich der Messeinheit (410) liegt, wenn sich die Mikroplatte (170) in einer Messposition zwischen der Waschstation (200) und der Arbeitsstation (300) befindet. Die Messeinheit umfasst eine Messlichtquelleneinheit (420) zum Einstrahlen eines Messlichtstrahls (425) mit infrarotem Messlicht von einer Lichteintrittsseite derart, dass das Messlicht eine Querschnittsfläche eines Näpfchens (172) im Wesentlichen vollständig ausleuchtet; und einen für das Messlicht sensitiven Detektor (430) zum Erfassen von Messlicht nach Wechselwirkung mit dem Näpfchen und darin aufgenommener Flüssigkeit und zur Abgabe von Detektorsignalen an eine Auswerteeinrichtung.

## Beschreibung

### ANWENDUNGSGEBIET UND STAND DER TECHNIK

Die Erfindung betrifft eine Vorrichtung mit einer Waschstation zum Reinigen von Mikroplatten gemäß dem Oberbegriff von Anspruch 1. Die Vorrichtung kann z.B. nach Art eines Mikroplatten-Waschers oder eines Wascher-Dispensers ausgebildet sein. Die Erfindung betrifft auch ein Reinigungsverfahren zum Reinigen von Mikroplatten, das mithilfe der Vorrichtung ausgeführt werden kann.

Optische Verfahren gehören zu den wichtigsten Untersuchungsverfahren in der biochemischen und pharmakologischen Forschung. Zur Messwerterfassung werden meist hochempfindliche Messvorrichtungen eingesetzt. Diese können z.B. auf ein bestimmtes Messverfahren, z.B. auf Fluoreszenzmessungen, spezialisiert sein oder als Multi-Technologie-Geräte, z.B. sogenannte Multi-Label-Reader (MLR) oder Multi-Mode-Reader, ausgelegt sein, die für zwei oder mehr unterschiedliche Messverfahren genutzt werden können, z.B. für Fluoreszenzmessungen, Lumineszenzmessungen, Absorptionsmessungen etc.

Zur Durchführung der Untersuchungen werden häufig Probenmultiplex-Verfahren angewandt, bei denen die zu untersuchenden Proben in einer Matrixanordnung in Probenaufnahmen (Näpfchen bzw. (wells) einer Mikroplatte (microwell plate, häufig auch als "Mikrotiterplatte" bezeichnet) angeordnet sind und entweder sequentiell oder parallelisiert untersucht werden. Die Art der untersuchten Proben ist hierbei äußerst vielfältig. Sie kann bei biologischen Proben z.B. von homogenen Lösungen bis zu immobilisierten Zellen reichen.

Eine wesentliche Voraussetzung zum Erreichen aussagekräftiger Untersuchungsergebnisse besteht darin, mit möglichst sauberem, kontaminationsfreien Labormaterial und möglichst exakt dosierten Reagenzien zu arbeiten. Bei Dispensier- und Absaugvorgängen von wässrigen Flüssigkeiten in Mikroplatten kann es jedoch zu Fehlfunktionen durch unvollständige Absaugungen oder Befüllungen der Probenaufnahmen von Mikroplatten kommen. Auch bei Plattenbeschichtungsanwendungen durch einen Washer-Dispenser, wie z.B. bei der Beschichtung von Mikroplatten mit Streptavidin zur Bindung von Biotin, müssen Flüssigkeiten verlässlich gehandhabt werden.

In der DE 10 2007 005 618 A1 werden ein Verfahren und eine Vorrichtung zur gleichzeitigen Bestimmung der Masse, des Volumens oder der Art von Stoffproben in zahlreichen kleinen Kavitäten, insbesondere von Wells in Mikrotiterplatten beschrieben. Das Verfahren sieht vor, dass den teilweise oder vollständig mit Proben gefüllten Kavitäten Energie durch eine Energiequelle zugeführt wird. Hierdurch erwärmen sich die Proben in Abhängigkeit von ihrer Masse mehr oder minder stark. Die Bestimmung der Stoffmenge in den einzelnen Kavitäten wird somit auf eine Temperaturmessung zurückgeführt. Das parallele Erfassen der Probentemperatur in den einzelnen Kavitäten kann vorteilhafterweise durch eine Infrarotkamera als Detektor erfolgen. Das Gesamtsystem, das im Wesentlichen aus einer Energiequelle und einem Detektor besteht, kann durch die Implementierung geeigneter Kalibrier- und Messroutinen in einer Auswerteeinheit so aufgebaut werden, dass die Stoffmengen in den einzelnen Kavitäten direkt angezeigt werden.

In biowissenschaftlichen Laboren gehört neben dem Befüllen von Probenbehältern mit möglichst exakt dosierten Flüssigkeitsmengen auch das Waschen und Spülen von beschichteten oder unbeschichteten Probenaufnahmen im Verlauf vieler Protokolle zur alltäglichen Routine. Sind nur wenige Mikroplatten abzuarbeiten, kann mit der Mehrkanalpipette von Hand gewaschen werden. Mikrotiterplatten können aber auch mit eigens dafür hergestellten Waschgeräten, häufig als Mikroplatten-Wascher oder Mikroplatten-Washer bezeichnet, gereinigt und sterilisiert werden. In manchen Fällen sind auch weitere Dosiereinrichtungen integriert, z.B. bei Washer-Dispensern, in denen auch eine Plattenbeschichtungsfunktion integriert sein kann.

Ein wichtiges Qualitätskriterium von Mikroplatten-Washern oder Washer-Dispensern ist die Restflüssigkeit, die nach dem Waschprozess in den Wells zurückbleibt. Damit nachfolgende Reaktionen oder Assays nicht gestört oder Ergebnisse verfälscht werden, sollte diese so klein wie möglich sein. Winzige Tropfen vom Boden eines Wells zu entfernen, ist nicht ohne erheblichen Aufwand möglich. Entsprechend findet sich in den Geräte-Spezifikationen Nadelbasierter Platten-Wascher meist ein recht einheitlicher Wert für das Restvolumen von zwei Mikrolitern.

Alternativ kann man die Probenbehälter auch mittels Wärme trocknen. Dabei können aber Reagenzien infolge Kristallisationsvorgängen als Rückstände in der Mikroplatte verbleiben, die sich dann bei der nachfolgenden Befüllung mit Proben auflösen und zu Fehldosierungen von Reaktionsbestandteilen führen können.

Ein Fachartikel der Online-Publikation "Laborjournal", verfügbar unter der URL (https://www.laborjournal.de/rubric/produkte/alle/2022_03.php), berichtet unter der Überschrift "Waschen und schleudern - Produktübersicht: Mikroplatten-Wascher" von Reinigungssystemen, die das Prinzip einer rotierenden Wäschetrommel nutzen, um die Flüssigkeiten mithilfe der Zentrifugalkraft aus den Wells herauszuschleudern.

### AUFGABE UND LÖSUNG

Es ist eine Aufgabe der Erfindung, die Prozesssicherheit bei Wasch- und Dispensiervorhaben von Mikroplatten effizient und auf wirtschaftliche Weise zu verbessern, insbesondere in Verbindung mit dem Beschichten Innenseiten der Probenaufnahmen mit reaktiven Reaktionspartnern.

Zur Lösung dieser Aufgabe stellt die Erfindung eine Vorrichtung mit den Merkmalen von Anspruch 1 bereit. Weiterhin wird ein Verfahren mit den Merkmalen von Anspruch 13 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Vorrichtung weist eine Waschstation zum Reinigen von Mikroplatten auf. Die Waschstation umfasst wenigstens einen Waschkopf, der unmittelbar oder mittelbar von einer Vorrichtungsbasis getragen wird. Die Vorrichtungsbasis trägt einige Komponenten der Vorrichtung und kann beispielsweise in Form einer Bodenplatte oder eines Basisgehäuses gestaltet sein. Der Waschkopf weist eine Vielzahl von Werkzeugeinheiten auf, die jeweils eine Dispensierspitze zur Abgabe einer Flüssigkeit in ein Näpfchen der Mikroplatte sowie eine Ansaugspitze zum Ansaugen von Flüssigkeit aus dem Näpfchen tragen. Mithilfe des Waschkopfs kann ein Waschvorgang durchgeführt werden, bei dem eine Flüssigkeit, beispielsweise eine Reinigungsflüssigkeit, in das Näpfchen über die Dispensierspitze eingebracht wird und nach Abschluss der Reinigungsoperation mithilfe der Ansaugspitze wieder mehr oder weniger vollständig abgesaugt wird.

Die Anzahl der Werkzeugeinheiten kann der Anzahl der Näpfchen derjenigen Mikroplatten entsprechen, für die die Vorrichtung ausschließlich oder optional ausgelegt ist. Beispielsweise können 96 Werkzeugeinheiten in einer 8 x 12 Rasteranordnung vorgesehen sein.

Vorzugsweise sind Werkzeugeinheiten in zwei Achsen motorisch beweglich. Dadurch wird ein Versetzen der Werkzeugeinheit ermöglicht, dass z.B. auch Mikroplatten im Rastermaß 16 x 24 bearbeitet werden können.

Zusätzlich zu der Waschstation hat die Vorrichtung wenigstens eine Arbeitsstation, die vorzugsweise im festen räumlichen Bezug zur Waschstation steht und von der Vorrichtungsbasis getragene Einrichtungen zur Handhabung oder Behandlung wenigstens einer Mikroplatte aufweist. Der Begriff "Handhabung" bedeutet hierbei vor allem Positionsänderungen der Mikroplatte. Bei der "Behandlung" wird auf die Mikroplatte oder auf die mit der Mikroplatte transportierten Substanzen eingewirkt, um Veränderungen zu erzielen.

Weiterhin ist ein Transportsystem vorhanden, das von der Vorrichtungsbasis getragene Einrichtungen zum Transportieren einer Mikroplatte entlang einer Transportstrecke aufweist, wobei die Transportstrecke sich mindestens zwischen der Waschstation und der Arbeitsstation erstreckt. Damit kann wenigstens eine Mikroplatte von der Arbeitsstation zur Waschstation und/oder von der Waschstation zur Arbeitsstation bewegt werden.

Eine Besonderheit der Vorrichtung gemäß der beanspruchten Erfindung besteht darin, dass eine Flüssigkeitsmengen-Messeinrichtung mit wenigstens einer Messeinheit vorhanden ist, die es erlaubt, eventuell vorhandene störende Flüssigkeitsreste in einem Näpfchen einer Mikroplatte zu identifizieren. Die Messeinheit ist an der Transportstrecke zwischen der Waschstation und der Arbeitsstation positioniert oder kann für die Durchführung der Messung dort positioniert werden, und zwar in der Weise, dass ein Näpfchen sich im Erfassungsbereich einer Messeinheit befindet, wenn sich die Mikroplatte in einer Messposition zwischen der Waschstation und der Arbeitsstation befindet. Die Vorrichtung hat somit wenigstens drei Stationen unterschiedlicher Funktion, nämlich die Waschstation, die ihr zugeordnete Arbeitsstation sowie die dazwischen angeordnete Messstation mit der Möglichkeit, den Inhalt von Näpfchen auf dem Hinweg zwischen Arbeitsstation und Waschstation und/oder auf dem Rückweg von der Waschstation zurück zur Arbeitsstation messtechnisch zu erfassen.

Die wenigstens eine Messeinheit der Flüssigkeitsmengen-Messeinrichtung umfasst eine Messlichtquelleneinheit zum Einstrahlen eines Messlichtstrahls mit infrarotem Messlicht von einer Lichteintrittsseite derart, dass das Messlicht eine Querschnittsfläche eines Näpfchens innerhalb eines Messzeitintervalls im Wesentlichen vollständig ausleuchtet. Vorzugsweise wird dazu bei einer Messeinheit ein einziger Messlichtstrahl mit einem Messlichtstrahlquerschnitt erzeugt, der hinsichtlich Form und Größe an die Form und die Größe der Näpfchen so angepasst ist, dass ein Zielquerschnitt eines Näpfchens, beispielsweise der gesamte Bodenbereich, vollständig ausgeleuchtet werden kann. Das Messlicht einer Messlichtquelleneinheit wird von einer Lichteintrittsseite in ein Näpfchen eingestrahlt. Die Lichteintrittsseite entspricht dabei vorzugsweise derjenigen Seite, zu der sich die Näpfchen öffnen. In der Regel befindet sich die Lichteintrittsseite oberhalb desjenigen Niveaus, auf dem die Mikroplatte zwischen Arbeitsstation und Waschstation bewegt wird. Schließlich umfasst die Vorrichtung auch noch wenigstens einen für das Messlicht sensitiven Detektor, der dafür eingerichtet ist, das Messlicht nach dessen Wechselwirkung mit dem Näpfchen und eventuell darin aufgenommener Flüssigkeit zu erfassen und entsprechende Detektorsignale abzugeben, die dann an eine Auswerteeinrichtung weitergeleitet werden können.

Die Erfindung nutzt unter anderem die Erkenntnis, dass Infrarotstrahlung bei bestimmten Wellenlängen von Infrarotlicht von Wasser und wasserhaltigen Flüssigkeiten relativ stark absorbiert wird, so dass das Infrarotlicht als Sonde für das Vorhandensein wasserhaltiger Flüssigkeiten genutzt werden kann.

Die Erfindung nutzt die Absorptionspeaks von Wasser zur Generierung von akzeptabel hohen Messignalen. Somit ergibt sich ein hohes Messsignal auch schon bei kleinen wässrigen Verschmutzungen. Das Konzept bietet weiterhin eine messtechnisch tiefenscharfe Erfassung der gesamten Bodenfläche des Probengefäßes. Damit können nicht nur Reste detektiert werden, die den Boden des Näpfchens komplett bedecken, sondern auch tröpfchenartige Reste, die nur einen kleinen Teil des Bodens bedecke und die z.B. im Bereich des Übergangs zwischen Bodenfläche und Innenwand des Näpfchens haften. Die Messergebnisse sind weitestgehend unabhängig vom Umgebungslicht. Das bedeutet unter anderem, dass die Messanordnung bezüglich Tageslichts nicht besonders lichtdicht abgeschirmt werden muss, wodurch Kosten eingespart werden können.

Besonders vorteilhaft wirkt sich die Erfindung bei Anwendungen aus, bei denen die Schritte Waschen und Dispensieren in Verbindung mit dem Beschichten der Probenaufnahmen-Innenseiten mit reaktiven Reaktionspartnern durchgeführt werden, mit denen später durch Zugabe einer Probe ein Nachweis für eine bestimmte analytische Reaktion geführt werden kann. Mehrfaches Waschen und Dispensieren wird dort angewendet, um Reagenzien-Beschichtungen homogen in den Näpfchen bzw. wells wachsen zu lassen.

Gemäß einer Weiterbildung weist eine Messlichtquelleneinheit wenigstens eine Infrarot-Laserdiode als Messlichtquelle auf. Dies gilt vorzugsweise für alle Messlichtquelleneinheiten der Vorrichtung.

Wenn die Abstrahlcharakteristik der primären Messlichtquelle dafür ausreicht, den gesamten Querschnitt eines Näpfchens auszuleuchten, kann ohne vorgeschaltete Strahlformungsoptik gearbeitet werden. Bei manchen Ausführungsformen ist vorgesehen, dass eine Messlichtquelleneinheit eine der (primären) Messlichtquelle nachgeschaltete Strahlformungsoptik zur Erzeugung eines im Wesentlichen kollimierten Messstrahls oder eines divergenten Messstrahls aufweist, wobei der Messstrahl im Bereich einer Probenebene im Wesentlichen einen Querschnitt aufweist, welcher dem Querschnitt eines Näpfchens im Bodenbereich entspricht. Damit kann erreicht werden, dass einerseits mithilfe des Messstrahls zuverlässig der gesamte Bodenbereich ausgeleuchtet werden kann, dass aber andererseits die Messstrahlung der Messlichtquelle im Wesentlichen vollständig für die Messung genutzt wird, ohne dass zu viel Lichtenergie durch Abstrahlung in andere Richtungen vergeudet wird.

Es ist auch möglich, dass eine Messlichtquelleneinheit eine Messlichtquelle und eine der Messlichtquelle nachgeschaltete Strahlformungsoptik zur Erzeugung eines linienförmigen Messstrahls aufweist, der im Bereich einer Probenebene in einer Längsrichtung eine Länge aufweist, welche im Wesentlichen dem Durchmesser eines Näpfchens im Bodenbereich entspricht Wenn dann die Messlichtquelleneinheit und die Mikroplatte während eines Messzeitintervall in einer Richtung quer zur Längsrichtung des Messstrahls relativ zueinander bewegt werden, kann der Bodenbereich lückenlos gescannt werden.. Der linienförmige Messlichtstrahl kann dann die Bodenfläche im Vorbeifahren (on the fly) abtasten. Bei Bedarf können käuflich erwerbbare Laserdiodenmodule genutzt werden. Man benötigt keine Weißlichtquelle mit Verteilung des Lichts auf mehrere Kanäle, Referenzierung und entsprechende Farbfilter entfallen. Eine Referenzierung zur Driftkorrektur der Lasermodule kann in Zeitfenstern über die Messdiode erfolgen. Die Vorrichtung kann dazu so ausgebildet sein, dass der Detektor eine Messdiode aufweist, die gleichzeitig als Referenzdiode und/oder oder Stabilisierungsdiode für die Messlichtquelleneinheit geschaltet ist. In solchen Fällen ist keine Auskopplung von Licht zu einer zusätzlichen Referenzdiode nötig. Das vereinfacht den Messaufbau.

Damit eine Referenzierung im Betrieb auch bei bewegtem Transport zu vereinfachen, kann vorgesehen sein, dass die Einrichtungen zum Transportieren einer Mikroplatte entlang der Transportstrecke einen Transportschlitten aufweisen, der Bohrungen und/oder Öffnungen aufweist, die eine Referenzmessung der Messlichtquelle, insbesondere der Infrarot-Laserdiode, zur Messdiode hin ohne die Mikroplatte ermöglicht

Eine Vereinfachung des Messaufbaus wird bei manchen Ausführungsformen dadurch erreicht, dass mehrere Messeinheiten eine gemeinsame Messlichtquelleneinheit aufweisen, wobei Messlicht der Messlichtquelleneinheit auf mehrere Lichtleiter aufgeteilt wird und von Lichtaustrittsflächen der Lichtleiter emittiertes Messlicht jeweils durch eine nachgeschaltete Strahlformungsoptik in ein Näpfchen führbar ist. Vorzugsweise habe alle Messeinheiten einer Reihe von Messeinheiten dieselbe Messlichtquelleneinheit, also nur eine einzige Messlichtquelle

Die Messanordnung ist nicht nur für Mikroplatten mit (für sichtbares Licht) transparentem Boden anwendbar ist, sondern nachweislich auch gut zur Qualitätskontrolle bei der Prozessierung von Mikroplatten mit für sichtbares Licht nicht transparentem, weißen Boden geeignet.

Gemäß einer Weiterbildung ist vorgesehen, dass die Flüssigkeitsmengen-Messeinrichtung eine Vielzahl von Messeinheiten aufweist, die an der Transportstrecke zwischen der Waschstation und der Arbeitsstation derart angeordnet sind, dass mehrere der Näpfchen gleichzeitig im Erfassungsbereich jeweils einer Messeinheit liegen, wenn sich die Mikroplatte in einer Messposition zwischen der Waschstation und der Arbeitsstation befindet. Insbesondere kann es so sein, dass eine Reihe gleichartiger Messeinheiten vorgesehen ist, deren Anzahl der Anzahl von Näpfchen in einer quer zur Transportstrecke laufenden Spalte von Näpfchen einer Mikroplatte entspricht. Damit können innerhalb einer Messoperation alle Näpfchen einer Spalte zeitgleich vermessen werden.

Die Messeinheiten können fest an einer Position der Vorrichtung montiert sein. Es ist auch möglich, eine oder mehrere Messeinheiten an einer verfahrbaren Einheit anzubringen, um sie relativ zur Mikroplatte beispielsweise in Richtung einer Spalte der Mikroplatte bewegen zu können, während sich die Mikroplatte in der Messposition befindet. Damit können Näpfchen einer Spalte sukzessive nacheinander gemessen werden.

Gemäß einer Weiterbildung ist vorgesehen, dass der Detektor auf einer der Lichteintrittsseite gegenüberliegenden Seite einer Probenebene liegt, so dass durch den Detektor Messlicht nach Durchtritt durch einen Bodenbereich des Näpfchens und einer eventuellen Wechselwirkung mit einem Näpfcheninhalt detektiert werden kann. Diese Messung im Durchlicht ist bei Mikroplatten mit transparentem Näpfchenboden möglich, funktioniert aber dank der Verwendung von Infrarotstrahlung auch bei weißen bzw. opaken Böden, die für sichtbares Licht undurchlässig sind.

Die Messung im Durchlicht ist in der Regel bevorzugt. Es ist jedoch auch möglich, dass der Detektor an der Lichteintrittsseite der Transportstrecke derart angeordnet ist, dass durch den Detektor aus dem Näpfchen rückgestreutes Messlicht detektiert werden kann. Bei Bedarf können Detektoren an beiden Seiten vorgesehen sein, so dass sowohl eine Messung im Durchlicht als auch eine Messung der rückgestreuten Intensitäten möglich ist.

Bei einer bevorzugten Ausführungsform ist vorgesehen, dass die Arbeitsstation wenigstens eine Mikroplattenstapelvorrichtung aufweist. Eine Mikroplattenstapelvorrichtung ist dafür eingerichtet, mehrere Mikroplatten in einer Stapelanordnung übereinanderliegend unterzubringen. Die Mikroplatten können dann einzeln vom Stapel entnommen werden oder einzeln eingefügt werden. So ist es beispielsweise möglich, Mikroplatten auf geeignete Weise zur Waschstation zu bringen, dort zu waschen und nach dem Absaugen der Reinigungsflüssigkeit entlang der Transportstrecke zu der Mikroplattenstapelvorrichtung zu bewegen, die dann die gereinigten und für weitere Nutzungen bereiten Mikroplatten enthält.

Es gibt auch Vorrichtungen, die wenigstens eine erste Mikroplattenstapelvorrichtung zur Aufnahme von der Waschstation zuführbaren Mikroplatten und wenigstens eine zweite Mikroplattenstapelvorrichtung zur Aufnahme von von der Waschstation zurückgeführten Mikroplatten aufweist. Erste und zweite Mikroplattenstapelvorrichtungen können auf derselben Seite der Waschstation entlang der Transportstrecke untergebracht sein.

Bei manchen Ausführungsformen ist vorgesehen, dass die Arbeitsstation wenigstens eine Dispensiervorrichtung zur Abgabe eines flüssigen Mediums in Näpfchen der Mikroplatte umfasst, wobei die Dispensiervorrichtung entlang der Transportstrecke zwischen der Waschstation und einer Mikroplattenstapelvorrichtung angeordnet ist. Die Dispensiervorrichtung kann beispielsweise genutzt werden, um in die Näpfchen ein fließfähiges Beschichtungsmedium einzubringen, welches die Innenseite der Näpfchen benetzen kann.

In der Folge kann dann die Mikroplatte zur Waschstation gefördert werden, um mithilfe von Reinigungsflüssigkeit überflüssiges Beschichtungsmedium zu entfernen und gemeinsam mit der Reinigungsflüssigkeit abzusaugen. Anschließend wird die Mikroplatte mit den beschichteten und gereinigten Näpfchen zu einer Mikroplattenstapelvorrichtung gefördert, die zur Aufnahme von beschichteten Mikroplatten für die weitere Verwendung vorgesehen ist.

Bei einer Ausführungsform weist die Dispensiervorrichtung zwischen der Arbeitsstation und der Waschstation eine Reihe von einzelnen Dispensiereinheiten auf, deren Anzahl der Anzahl von Näpfchen einer Spalte der Mikroplatte entspricht, so dass alle Näpfchen einer Spalte gleichzeitig mit dem einzufüllenden Medium gefüllt werden können.

Eine weitere Ausführungsform verfügt über einen Dispensierkamm mit 24 im Raster einer 384 Proben-Mikroplatte angeordneten Dispensiereinheiten, der alternativ in die Transportstrecke platziert werden kann.

In manchen Ausführungsformen kann sowohl das Dispensierergebnis als auch das Absaugergebnis auf einer Achsenbewegung bewertet werden.

Es ist nicht zwingend, dass die Arbeitsstation einen oder mehrere Mikroplattenstapelvorrichtungen aufweist. Es ist auch möglich, dass die Arbeitsstation einen Inkubator aufweist oder ein weiteres Messsystem. In jedem Fall kann sichergestellt werden, dass die Mikroplatte nach Reinigung in der Waschstation mithilfe der Flüssigkeitsmengen-Messeinrichtung daraufhin überprüft werden kann, ob sich noch Restflüssigkeit in unakzeptabler Menge in den Näpfchen sich befindet.

Die Erfindung betriff auch ein Verfahren zum Reinigen einer Mikroplatte mit folgenden Schritten: Transportieren der Mikroplatte zu einer Waschstation; Dispensieren von Reinigungsflüssigkeit in Näpfchen der Mikroplatte und Absaugen von Reinigungsflüssigkeit aus den Näpfchen nach Wechselwirkung der Reinigungsflüssigkeit mit dem jeweiligen Näpfchen; Transportieren der Mikroplatte entlang einer Transportstrecke in eine Messposition derart, dass wenigstens ein Näpfchen, insbesondere mehrere Näpfchen gleichzeitig, in einem Erfassungsbereich jeweils einer einem Näpfchen zugeordneten Messeinheit angeordnet ist; Einstrahlen eines Messlichtstrahls, insbesondere eines parallelisierten oder divergenten Messlichtstrahls, mit infrarotem Messlicht von einer Lichteintrittsseite eines Näpfchens derart, dass das Messlicht eine Querschnittsfläche des Näpfchens im Wesentlichen vollständig ausleuchtet; Detektieren des Messlichts nach Wechselwirkung mit dem Näpfchen und gegebenenfalls darin aufgenommener Restflüssigkeit; Auswertung von Detektorsignalen des Detektors zur quantitativen Bestimmung von Restflüssigkeit in dem Näpfchen.

Abhängig vom Ergebnis der Auswertung kann dann eine adäquate vorgebbare Aktion eingeleitet werden. Beispielsweise kann die Mikroplatte zu einen Plattenstapel mit Gutteilen transportiert werden, wenn eine Menge an Restflüssigkeit unterhalb eines vorgebbaren Grenzwerts oder auf dem Grenzwert liegt. Es kann eine Benutzerinformation zum Ergebnis der Auswertung abgegeben werden, wobei vorzugsweise eine Fehlermeldung abgegeben wird, wenn eine Menge an Restflüssigkeit oberhalb eines vorgebbaren Grenzwerts liegt. Wenn bei einer Mikroplatte wiederholt Fehlermeldungen auftreten, kann die Mikroplatte aus der Vorrichtung ausgeschleust werden. Dazu kann ein Fehlersignals abgegeben werden. Gegebenenfalls kann die Vorrichtung in einen Fehlermodus versetzt werden, um einem Bediener die Möglichkeit zur Fehlersuche und Fehlerbeseitigung zu geben.

Offenbart ist somit auch die Anwendung der Infrarotabsorption als Mittel zur Qualitätssicherung von Dispensier- und Absaugvorgängen.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind.
- Fig. 1: zeigt in schräger Perspektive Komponenten einer Ausführungsform einer Vorrichtung, die als Washer-Dispenser für Mikroplatten ausgelegt ist,
- Fig. 2: zeigt Details der Vorrichtung in Seitenansicht;
- Fig. 3: zeigt Details der Vorrichtung in Draufsicht;
- Fig. 4: zeigt schematisch einen Messvorgang in Seitenansicht sowie ein vergrößertes Detail.

### DETAILLIERTE BESCHREIBUNG DER AUSFÜHRUNGSBEISPIELE

Bei Dispensier- und Absaugvorgängen von wässrigen Flüssigkeiten in Mikroplatten kann es zu Fehlfunktionen durch unvollständige Absaugungen oder Befüllungen der Probenaufnahmen (Näpfchen) von Mikroplatten kommen. Um die Prozesssicherheit bei Wasch- und Dispensiervorhaben in Mikroplatten sicherzustellen, wird hier anhand einiger Ausführungsbeispiele eine Messtechnik vorgestellt, die es erlaubt Rückstände nach Absaugvorgängen zu detektieren und Fehlfunktion in Bezug auf fehlerhafte Dispensiervolumen zu erfassen und dem Benutzer mitzuteilen.

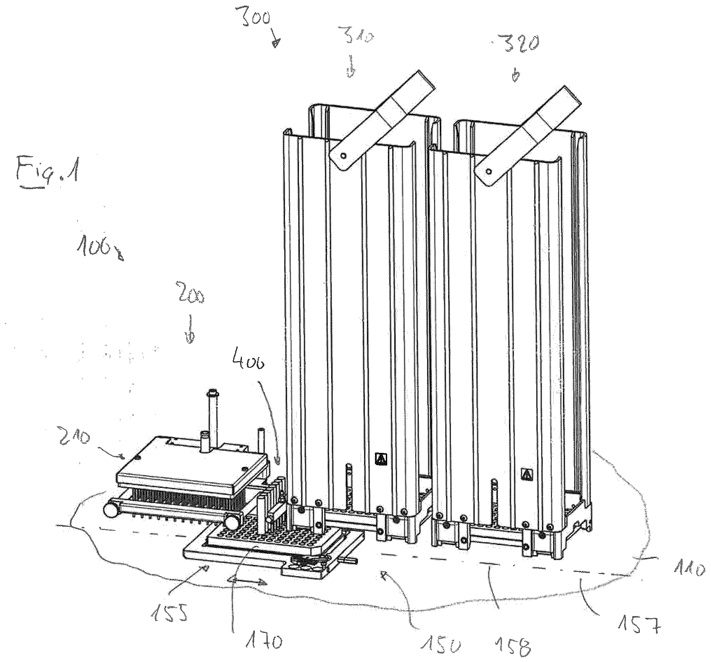

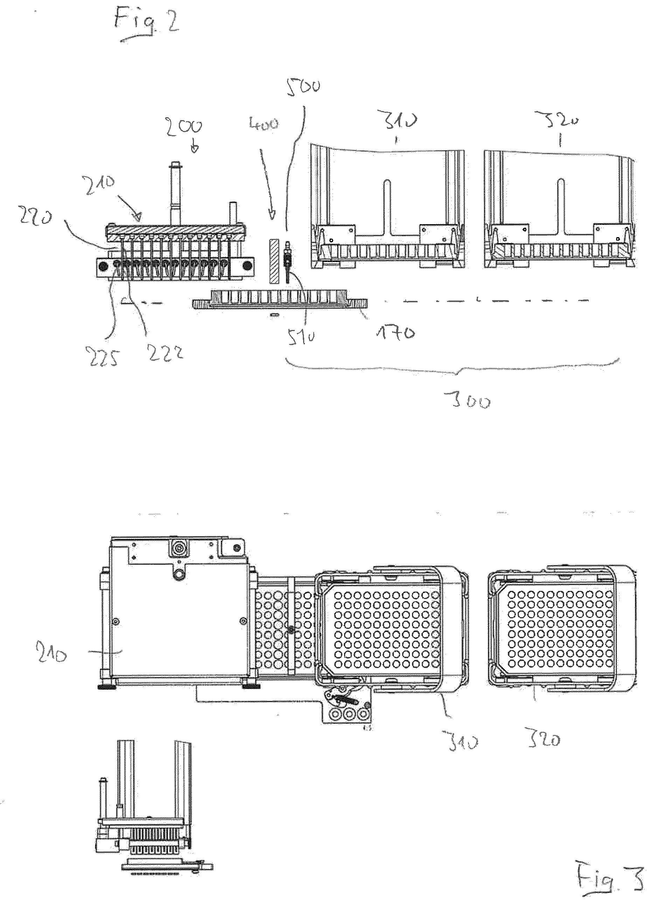

Nachfolgend wird anhand der Fig. 1 bis 4 ein Ausführungsbeispiel einer Vorrichtung 100 mit einer Waschstation 200 zum Reinigen von Mikroplatten erläutert. Die Vorrichtung 100 ist als Platten-Beschichtungs-Vorrichtung konzipiert und enthält Einrichtungen mit Waschfunktion und Einrichtungen mit Dispensierfunktion. Die Vorrichtung 100 kann beispielsweise für die Beschichtung von Näpfchen von Mikroplatten genutzt werden. Beschichtung bedeutet hier insbesondere die Immobilisierung von Antigenen, Antikörpern oder anderen Verbindungen auf der Oberfläche bzw. an der Innenfläche eines Näpfchens zum Zwecke eines Bindungstests.

Die Vorrichtung 100, die im Folgenden auch als Washer-Dispenser 100 bezeichnet wird, weist eine Vorrichtungsbasis 110 in Form einer stabilen Bodenplatte auf, die unter anderem die in Fig. 1 gezeigten Komponenten trägt. Die Vorrichtung umfasst eine Waschstation 200, die mit einem Waschkopf 210 ausgestattet ist, und eine Arbeitsstation 300, die mit zwei gleichartig aufgebauten Mikroplattenstapelvorrichtungen 310, 320 ausgestattet ist. Eine der Waschstation näherliegende erste Mikroplattenstapelvorrichtung 310 dient dazu, einen Vorrat mit noch nicht beschichteten Mikroplatten aufzunehmen, die dafür vorgesehen sind, der Waschstation 200 sukzessive zugeführt zu werden. Die zweite Mikroplattenstapelvorrichtung 320 dient zur Aufnahme von gereinigten Mikroplatten, die nach der Reinigungsoperation von der Waschstation unter der ersten Mikroplattenstapelvorrichtung 310 hindurch zur zweiten Mikroplattenstapelvorrichtung transportiert werden.

Zum Transport der Mikroplatten ist ein Transportsystem 150 vorgesehen, das einen rahmenartig aufgebauten Mikroplattenträger 155 umfasst, welcher mithilfe eines nicht dargestellten Antriebs entlang einer geradlinigen Transportstrecke 157 in horizontaler Transportrichtung 158 unterhalb der genannten Komponenten zwischen der Waschstation 200 und der Arbeitsstation 300 hin- und her verfahren werden kann. Die Mikroplatte 170 ist eine Standard-Mikroplatte mit 96 Näpfchen 172 bzw. Wells, die in einem 12x8-Raster angeordnet sind. Die Näpfchen haben einen für sichtbares Licht und IR-Strahlung transparenten Boden, andere Ausführungsbeispiele haben einen für IR-Strahlung transparenten weißen Boden. Die Mikroplatte wird so in dem Mikroplattenhalter 155 aufgenommen, dass die Reihen mit jeweils zwölf Näpfchen parallel zur Transportrichtung 158 orientiert sind und die Spalten mit jeweils acht Näpfchen senkrecht dazu.

Der Waschkopf 210 hat einen obenliegenden Träger, an dessen Unterseite insgesamt 96 Werkzeugeinheiten 220 in einem dem Raster der Mikroplatte entsprechenden Raster angeordnet sind. Jede Werkzeugeinheit umfasst eine Dispensierspitze 222 zur Abgabe einer Reinigungsflüssigkeit in ein Näpfchen der darunter angeordneten Mikroplatte und eine Ansaugspitze 225 zum Ansaugen von Reinigungsflüssigkeit aus dem Näpfchen. Die unverbrauchte Reinigungsflüssigkeit wird über einen nicht dargestellten Schlauch von einem ebenfalls nicht dargestellten Flüssigkeitsvorrat mithilfe einer Pumpe zugeführt, die abgesaugte Flüssigkeit wird durch eine Schlauchleitung in einen Vorratsbehälter für verbrauchte Flüssigkeit abgesaugt.

In einem Zwischenraum zwischen der Arbeitsstation 300 und der Waschstation 200 sind Komponenten einer Flüssigkeits-Messeinrichtung 400 angeordnet. Zu dieser gehören acht Messeinheiten 410, die in einer senkrecht zur Transportstrecke orientierten Reihe nebeneinander angeordnet sind. Die lateralen Mittenabstände zwischen den Messeinheiten entsprechen den lateralen Mittenabständen zwischen den Näpfchen einer Spalte. Die Messeinheiten sind in Bezug auf die Transportstrecke so angeordnet, dass jeweils ein Näpfchen einer Spalte im Erfassungsbereich einer zugehörigen Messeinheit liegt, wenn die Mikroplatte mithilfe des Transportsystems in eine Messposition verfahren worden ist. Die Mikroplatte 170 ist in Vertikalrichtung so angeordnet, dass der Bodenbereich 173 der Näpfchen 172 in oder in der Nähe einer horizontalen Probenebene 140 liegt, so dass die Probenebene in der Nähe oder am Boden der Näpfchen verläuft. Eine solche Situation ist in den Figuren dargestellt.

Jede der Messeinheiten 410 umfasst eine Messlichtquelleneinheit 420 und einen Detektor 430. Die Messlichtquelleneinheiten 410 sind oberhalb der Probenebene 140 bzw. der Transportstrecke der Mikroplatte bzw. des Mikroplattenhalters angebracht. Diese Seite ist die Lichteintrittsseite der Näpfchen. Eine Messlichtquelleneinheit 420 dient zum Einstrahlen eines Messlichtstrahls 425 mit infrarotem Messlicht von der Lichteintrittsseite derart, dass das Messlicht eine Querschnittsfläche im Bodenbereich 173 eines Näpfchens im Wesentlichen vollständig ausleuchtet.

Zu jeder Messlichtquelleneinheit 420 gehört ein für das Messlicht sensitiver Detektor 430 zum Erfassen von Messlicht nach Wechselwirkung mit dem Näpfchen und der darin eventuell aufgenommenen Flüssigkeit 180. Es kann sich z.B. um eine für IR-Strahlung sensitive Messdiode handeln. Die Detektoren sind unterhalb der Probenebene 140 angeordnet. Die Detektoren sind an eine nicht dargestellte Auswerteeinrichtung angeschlossen, die die von den Detektoren abgegebenen Detektorsignale auswertet.

Jede Messlichtquelleneinheit 420 enthält als primäre Messlichtquelle eine Infrarotdiode, die infrarote Laserstrahlung aus dem Wellenlängenbereich zwischen ca. 900 nm und 1100 nm emittieren kann. Insbesondere die Wellenlängenbereiche um ca. 980nm und/oder um ca. 1083 nm sind im Strahlungsspektrum enthalten. Dort liegen starke Absorptionspeaks von Wasser. Eine vorgeschaltete Strahlformungsoptik ist so ausgelegt, dass ein aufgeweiteter Laserstrahl mit einem Strahlquerschnitt erzeugt werden kann, der so bemessen ist, dass bei senkrechter Einstrahlung der Laserstrahlung in das darunterliegende Näpfchen der gesamte Bodenbereich 173 mittels der Infrarotstrahlung ausgeleuchtet wird, ohne dass nennenswerte Anteile am Näpfchenrand reflektiert werden oder gestreut werden.

Im Beispielsfall umfasst die Arbeitsstation 300 zusätzlich zu den Mikroplattenstapelvorrichtungen 310, 320 noch eine Dispensiereinheit 500 mit einem 8-fach-Dispensierkopf 510, der für jedes Näpfchen einer Reihe eine Dispensierspitze zur Zugabe von flüssigem Medium aufweist, mit dem die jeweilige Innenfläche des Näpfchens beschichtet werden soll.

Die Vorrichtung kann wie folgt arbeiten. Wenn eine frische, noch nicht beschichtete Mikroplatte beschichtet und für eine nachfolgende Anwendung vorbereitet werden soll, wird die Mikroplatte am unteren Ende des in der ersten Mikroplattenstapelvorrichtung 310 gehaltenen Vorrats entnommen und in den horizontal verfahrbaren Mikroplattenhalter 155 überführt. Danach wird die im Mikroplattenhalter lagegesichert fixierte Mikroplatte durch horizontales Verfahren des Mikroplattenhalters parallel zur Probenebene 140 entlang der Transportstrecke 157 in Richtung Waschstation 200 bzw. Waschkopf bewegt.

Sollen die Näpfchen beschichtet werden, so wird die Fortbewegung des Plattenhalters gestoppt, wenn sich eine Spalte mit Näpfchen unterhalb der Dispensierspitzen der Dispensierköpfe 510 befindet. Durch gleichzeitiges Beschicken der Dispensierköpfe mit Beschichtungsmedium wird dieses in die Näpfchen einer Spalte ausgetragen bzw. dispergiert. Der Plattenhalter 155 wird dann zwischen den Dispensiervorgängen schrittweise vorgefahren, bis alle Näpfchen der zwölf Spalten mit Beschichtungsflüssigkeit gefüllt sind.

Dann verfährt die Mikroplatte zur Waschstation 300 in einen Bereich unterhalb des Waschkopfs 210. Dieser wird dann abgesenkt, bis die Austragöffnungen der Dispensierspitzen und die Ansaugöffnungen der Ansaugspitzen bis in die Nähe des Bodenbereichs 173 der Näpfchen abgetaucht sind. Dann wird einmal oder mehrfach Reinigungsflüssigkeit eingestrahlt und danach die gebrauchte Flüssigkeit über die Ansaugspitzen abgesaugt.

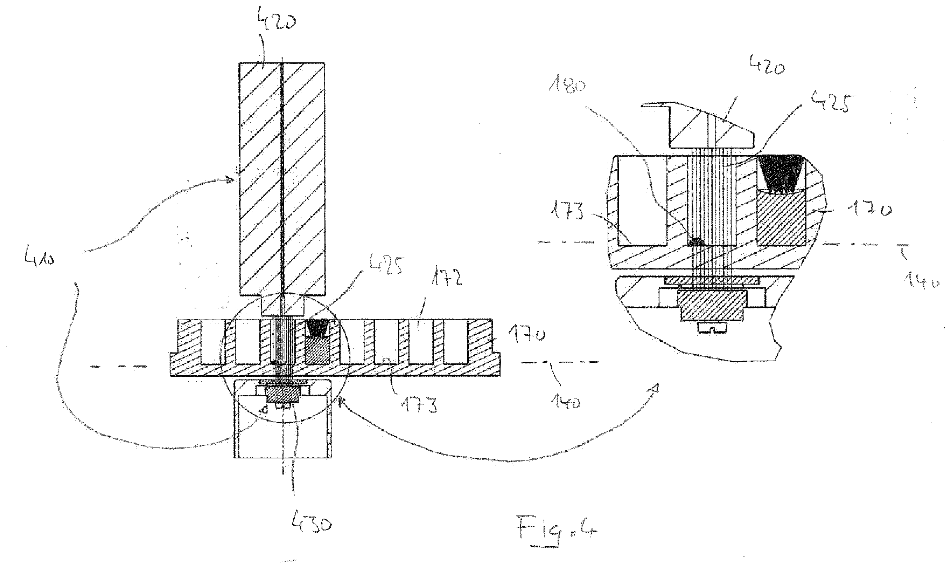

Ist die Reinigungsoperation nach einer vorgeschriebenen Anzahl von Zyklen beendet, so sollten sich in den Näpfchen nach dem letzten Absaugen keine Flüssigkeitsreste mehr befinden. In der Praxis ist dies jedoch häufig nicht der Fall und die Anteile von Restflüssigkeiten in den Näpfchen können unterschiedlich sein. Fig. 4 zeigt ein Restflüssigkeits-Tröpfchen 180-1. Dieser beim Absaugen übriggebliebene wässrige Tropfen absorbiert einen hohen Anteil der vom Lasermodul bzw. von der Messlichtquelleneinheit emittierte Wellenlänge des Infrarotlichts. Die vom Detektor detektierte Lichtmenge ist dadurch gegenüber einer Situation nach vollständiger Absaugung (ohne Restflüssigkeit) messbar reduziert

Um verlässliche Angaben über die Größenordnungen der Restflüssigkeitsmengen zu erhalten, wird die Mikroplatte dann auf dem Rückweg von der Waschstation Richtung Arbeitsstation in den Bereich unterhalb der Messlichtquelleneinheiten 420 der Flüssigkeitsmengen-Messeinrichtung 400 verfahren. Zwölfmal hintereinander werden jeweils alle Näpfchen einer Spalte gleichzeitig vermessen. Dazu wird über die Infrarot-Messlichtquelleneinheiten jeweils ein kollimierter Messstrahl 425 so von oben in die Näpfchen eingestrahlt, dass der gesamte Bodenbereich ausgeleuchtet wird und die Messstrahlung nach Wechselwirkung mit Näpfchen und Restflüssigkeit auf die sensitive Fläche des darunterliegenden Detektors 430 trifft (vgl. Fig. 4). Anhand der daraus ermittelten Detektorsignale kann im Rahmen der Auswertung festgestellt werden, ob die Restflüssigkeitsmengen in dem für den jeweiligen Prozess vorgesehen Toleranzbereich liegen oder bei einigen oder allen Näpfchen zu viel Restflüssigkeit enthalten ist.

Abhängig vom Ergebnis dieser Prüfung können dann die weiteren Verfahrensschritte durchgeführt werden. Sofern zu viel Restflüssigkeit vorhanden ist, kann die Mikroplatte nochmals in den Bereich des Waschkopfs zurückverfahren werden, um nochmals eine Absaugoperation durchzuführen. Ist die Restmenge beim ersten Messzyklus oder beim zweiten Messzyklus nach nochmaligem Absaugen im Toleranzbereich, so wird die beschichtete und gereinigte Mikroplatte entlang der Transportstrecke zur zweiten Mikroplattenstapelvorrichtung verfahren und dort am unteren Ende in den dortigen Vorratsstapel eingefügt.

Ergibt die Qualitätskontrolle, dass die Mikroplatte in Ordnung ist, so kommt die Mikroplatte somit in den "Fertigstack". Wenn nicht, kann nochmal nachgereinigt werden oder der Benutzer wird informiert und kann selbst entscheiden, was passieren soll. Es besteht die Möglichkeit, bei wiederholter Fehlermeldung die Platte über den Transportweg unter dem Waschkopf hindurch am Waschkopf vorbei durch eine Klappe seitlich aus dem Gerät zu fahren und dann das System in Fehlermodus zu versetzen. Der Benutzer kann dann die fehlerhafte Mikroplatte entnehmen und das System wieder in Gang setzen

Bei den Ausführungsbeispielen wird somit Infrarotabsorption zur Qualitätssicherung von Dispensier- und Waschfunktionen in Mikroplatten verwendet. Dabei wird eine im nahen Infrarot mit parallel geführtem Strahlenbündel emittierende Laserdiode verwendet. Die Wellenlänge ist nicht zufällig gewählt, sondern bedient sich der Absorptionsmaxima von wässrigen Lösungen bei z. B. 980 nm und alternativ einem noch wesentlichen höheren Absorptionspeak bei 1083 nm. Eine unter der Probe angebrachte Messdiode erfasst einen Messwert, der zu einem ohne Probe erfassten Messwert in Relation gesetzt wird. Durch die Ausdehnung des Lichtstrahles nahe dem Durchmesser des Probengefäßes werden auch Randbereiche des Bodens vom Messstrahl erfasst. Schon kleine Tröpfchen absorbieren in ausreichend hoher Intensität, um einen deutlichen Messeffekt gegenüber der Referenzmessung zu generieren. Es ist möglich, die Geometrie des Anregungslichtstrahles in ein divergentes oder konvergentes Anregungsprofil anzupassen, um auch im Durchmesser größere Probengefäße vollständig erfassen zu können. Dies kann mittels Querschnittswandlung durch Lichtleiter oder einer Linsenoptik erfolgen.

Viele Lichtquellen sind in der Emission ihrer Lichtintensität nicht ausreichend stabil. Deshalb werden sie normalerweise mittels einer lichtempfindlichen Referenzdiode stets überwacht und bei Abweichungen nachgeregelt. Bei manchen Ausführungsformen wird auf solch eine Referenzdiode verzichtet und es wird die eigentliche Messdiode genutzt, mit welcher kurz bevor die Mikroplatte zwischen Laser und Messdiode fährt, mindestens eine Nullmessung durchgeführt wird, um zu prüfen, ob die Lichtintensität stabil steht oder momentan driftet. Ist die Lichtintensität in einem vorgegebenen Toleranzbereich stabil, wird davon ausgegangen, dass sie bei der nachfolgenden Messung mit Probe auch stabil ist. Auch ein Referenzieren während die Probe im Messkanal steht ist möglich z.B. indem z.B. zehn Messungen durchgeführt werden und die Messergebnisse auf Driftsymptomatik (Steigung der Kinetikmessung) untersucht werden. Kinetikmessungen können in einem Zeitfenster vor der eigentlichen Probenmessung und/oder auch danach durchgeführt werden, um Stabilität des Systems zu prüfen.

Ähnlich einer nephelometrischen Messanordnung könnte auch die rückwärts gerichtete Erfassung von Lichtstreuung (nicht absorbierter Teil), die von der Oberfläche sphärischer Flüssigkeitstropfen herrührt als Messignal ausgewertet werden.

## Patentansprüche

1. Vorrichtung (100) mit einer Waschstation (200) zum Reinigen von Mikroplatten (170) umfassend:
- eine Vorrichtungsbasis (110);
- eine Waschstation (200) mit einem von der Vorrichtungsbasis (110) getragenen Waschkopf (210), der eine Vielzahl von Werkzeugeinheiten (220) mit jeweils einer Dispensierspitze (222) zur Abgabe einer Reinigungsflüssigkeit in ein Näpfchen (172) einer Mikroplatte (170) und einer Ansaugspitze (225) zum Ansaugen von Reinigungsflüssigkeit aus dem Näpfchen trägt;
- eine Arbeitsstation (300) mit von der Vorrichtungsbasis (100) getragenen Einrichtungen zur Handhabung oder Behandlung wenigstens einer Mikroplatte; und
- ein Transportsystem (150) mit von der Vorrichtungsbasis (110) getragenen Einrichtungen zum Transportieren einer Mikroplatte entlang einer Transportstrecke (157) zwischen der Waschstation (200) und der Arbeitsstation (300),
**gekennzeichnet durch**
- eine Flüssigkeitsmengen-Messeinrichtung (400) mit wenigstens einer Messeinheit (410), die an der Transportstrecke (157) zwischen der Waschstation (200) und der Arbeitsstation (300) derart positioniert oder positionierbar ist, dass ein Näpfchen (172) im Erfassungsbereich der Messeinheit (410) liegt, wenn sich die Mikroplatte (170) in einer Messposition zwischen der Waschstation (200) und der Arbeitsstation (300) befindet,
wobei die Messeinheit aufweist
- eine Messlichtquelleneinheit (420) zum Einstrahlen eines Messlichtstrahls (425) mit infrarotem Messlicht von einer Lichteintrittsseite derart, dass das Messlicht eine Querschnittsfläche eines Näpfchens (172) innerhalb eines Messzeitintervalls im Wesentlichen vollständig ausleuchtet; und
- einen für das Messlicht sensitiven Detektor (430) zum Erfassen von Messlicht nach Wechselwirkung mit dem Näpfchen und darin aufgenommener Flüssigkeit und zur Abgabe von Detektorsignalen an eine Auswerteeinrichtung.

2. Vorrichtung nach Anspruch 1, **dadurch gekennzeichnet, dass** eine Messlichtquelleneinheit (420) wenigstens eine Infrarot-Laserdiode als Messlichtquelle aufweist, wobei vorzugsweise die Infrarot-Laserdiode im Pulsbetrieb betreibbar ist.

3. Vorrichtung nach Anspruch 1 oder 2, **dadurch gekennzeichnet, dass** eine Messlichtquelleneinheit (420) eine Messlichtquelle und eine der Messlichtquelle nachgeschaltete Strahlformungsoptik zur Erzeugung eines im Wesentlichen kollimierten Messstrahls (425) oder eines divergenten Messstrahls aufweist, wobei der Messstrahl (425) im Bereich einer Probenebene im Wesentlichen einen Querschnitt aufweist, welche dem Querschnitt eines Näpfchens im Bodenbereich (173) entspricht.

4. Vorrichtung nach Anspruch 1 oder 2, **dadurch gekennzeichnet, dass** eine Messlichtquelleneinheit (420) eine Messlichtquelle und eine der Messlichtquelle nachgeschaltete Strahlformungsoptik zur Erzeugung eines linienförmigen Messstrahls aufweist, der im Bereich einer Probenebene in einer Längsrichtung eine Länge aufweist, welche im Wesentlichen dem Durchmesser eines Näpfchens im Bodenbereich (173) entspricht, wobei die Messlichtquelleneinheit und die Mikroplatte während eines Messzeitintervall in einer Richtung quer zur Längsrichtung des Messstrahls relativ zueinander bewegbar sind.

5. Vorrichtung nach einem der vorhergehenden Ansprüche, **dadurch gekennzeichnet, dass** die Flüssigkeitsmengen-Messeinrichtung (400) eine Vielzahl von Messeinheiten (410) aufweist, die an der Transportstrecke (157) zwischen der Waschstation (200) und der Arbeitsstation (300) derart angeordnet sind, dass mehrere der Näpfchen gleichzeitig im Erfassungsbereich jeweils einer Messeinheit (410) liegen, wenn sich die Mikroplatte in einer Messposition zwischen der Waschstation und der Arbeitsstation befindet, wobei vorzugsweise eine Reihe gleichartiger Messeinheiten vorgesehen ist, deren Anzahl der Anzahl von Näpfchen in einer quer zur Transportstrecke laufenden Spalte von Näpfchen einer Mikroplatte entspricht, so dass innerhalb einer Messoperation alle Näpfchen einer Spalte zeitgleich messbar sind.

6. Vorrichtung nach Anspruch 5, **dadurch gekennzeichnet, dass** mehrere Messeinheiten, insbesondere alle Messeinheiten einer Reihe von Messeinheiten, eine gemeinsame Messlichtquelleneinheit aufweisen, wobei Messlicht der Messlichtquelleneinheit auf mehrere Lichtleiter aufgeteilt wird und von Lichtaustrittsflächen der Lichtleiter emittiertes Messlicht jeweils durch eine nachgeschaltete Strahlformungsoptik in ein Näpfchen führbar ist.

7. Vorrichtung nach einem der vorhergehenden Ansprüche, **dadurch gekennzeichnet, dass** eine Messeinheit oder mehrere Messeinheiten an einer verfahrbaren Einheit angebracht sind, die motorisch relativ zur Mikroplatte in Richtung einer Spalte der Mikroplatte bewegbar ist, während sich die Mikroplatte in der Messposition befindet.

8. Vorrichtung nach einem der vorhergehenden Ansprüche, **dadurch gekennzeichnet, dass** der Detektor eine Messdiode aufweist, die gleichzeitig als Referenzdiode und/oder oder Stabilisierungsdiode für die Messlichtquelleneinheit geschaltet ist.

9. Vorrichtung nach einem der vorhergehenden Ansprüche, **dadurch gekennzeichnet, dass** der Detektor (430) auf einer der Lichteintrittsseite gegenüberliegenden Seite einer Probenebene (140) liegt, so dass durch den Detektor Messlicht nach Durchtritt durch einen Bodenbereich (173) des Näpfchens (172) und einer eventuellen Wechselwirkung mit einem Näpfcheninhalt detektierbar ist.

10. Vorrichtung nach einem der vorhergehenden Ansprüche, **dadurch gekennzeichnet, dass** die Einrichtungen zum Transportieren einer Mikroplatte entlang der Transportstrecke (157) einen Transportschlitten aufweisen, der vorzugsweise Bohrungen und/oder Öffnungen aufweist, die eine Referenzmessung der Messlichtquelle, insbesondere der Infrarot-Laserdiode, zur Messdiode hin ohne die Mikroplatte ermöglicht

11. Vorrichtung nach einem der vorhergehenden Ansprüche, **dadurch gekennzeichnet, dass** die Arbeitsstation (300) wenigstens eine Mikroplattenstapelvorrichtung (310, 320) aufweist, vorzugsweise wenigstens eine erste Mikroplattenstapelvorrichtung (310) zur Aufnahme von der Waschstation zuführbaren Mikroplatten und wenigstens eine zweite Mikroplattenstapelvorrichtung (320) zur Aufnahme von von der Waschstation zurückgeführten Mikroplatten.

12. Vorrichtung nach einem der vorhergehenden Ansprüche, **dadurch gekennzeichnet, dass** die Arbeitsstation (300) wenigstens eine Dispensiervorrichtung (500) zur Abgabe eines flüssigen Mediums in Näpfchen der Mikroplatte umfasst, wobei die Dispensiervorrichtung (500) entlang der Transportstrecke zwischen der Waschstation und einer Mikroplattenstapelvorrichtung angeordnet ist.

13. Verfahren zum Reinigen einer Mikroplatte mit folgenden Schritten:
Transportieren der Mikroplatte zu einer Waschstation;
Dispensieren von Reinigungsflüssigkeit in Näpfchen der Mikroplatte und Absaugen von Reinigungsflüssigkeit aus den Näpfchen nach Wechselwirkung der Reinigungsflüssigkeit mit dem jeweiligen Näpfchen;
Transportieren der Mikroplatte entlang einer Transportstrecke in eine Messposition, derart, dass wenigstens ein Näpfchen, insbesondere mehrere Näpfchen gleichzeitig, in einem Erfassungsbereich jeweils einer einem Näpfchen zugeordneten Messeinheit angeordnet ist;
Einstrahlen eines Messlichtstrahls mit infrarotem Messlicht von einer Lichteintrittsseite eines Näpfchens derart, dass das Messlicht eine Querschnittsfläche des Näpfchens im Wesentlichen vollständig ausleuchtet;
Detektieren des Messlichts nach Wechselwirkung mit dem Näpfchen und gegebenenfalls darin aufgenommener Restflüssigkeit;
Auswertung von Detektorsignalen des Detektors zur quantitativen Bestimmung von Restflüssigkeit in dem Näpfchen;
Einleiten einer Aktion in Abhängigkeit vom Ergebnis der Auswertung.

14. Verfahren nach Anspruch 13, **dadurch gekennzeichnet, dass** mindestens eine Aktion der folgenden Gruppe eingeleitet wird:
Transportieren der Mikroplatte zu einen Plattenstapel mit Gutteilen, wenn eine Menge an Restflüssigkeit unterhalb eines vorgebbaren Grenzwerts oder auf dem Grenzwert liegt;
Abgeben einer Benutzerinformation zum Ergebnis der Auswertung, wobei vorzugsweise eine Fehlermeldung abgegeben wird, wenn eine Menge an Restflüssigkeit oberhalb eines vorgebbaren Grenzwerts liegt;
Ausschleusen der Mikroplatte aus der Vorrichtung und Abgeben eines Fehlersignals, wenn bei einer Mikroplatte wiederholt Fehlermeldungen auftreten;
Versetzen der Vorrichtung in einen Fehlermodus.

## Geänderte Patentansprüche

### Geänderte Patentansprüche gemäss Regel 137(2) EPÜ.

1. Vorrichtung (100) mit einer Waschstation (200) zum Reinigen von Mikroplatten (170) umfassend:
- eine Vorrichtungsbasis (110);
- eine Waschstation (200) mit einem von der Vorrichtungsbasis (110) getragenen Waschkopf (210), der eine Vielzahl von Werkzeugeinheiten (220) mit jeweils einer Dispensierspitze (222) zur Abgabe einer Reinigungsflüssigkeit in ein Näpfchen (172) einer Mikroplatte (170) und einer Ansaugspitze (225) zum Ansaugen von Reinigungsflüssigkeit aus dem Näpfchen trägt;
- eine Arbeitsstation (300) mit von der Vorrichtungsbasis (100) getragenen Einrichtungen zur Handhabung oder Behandlung wenigstens einer Mikroplatte; und
- ein Transportsystem (150) mit von der Vorrichtungsbasis (110) getragenen Einrichtungen zum Transportieren einer Mikroplatte entlang einer Transportstrecke (157) zwischen der Waschstation (200) und der Arbeitsstation (300),
**gekennzeichnet durch**
- eine Flüssigkeitsmengen-Messeinrichtung (400) mit wenigstens einer Messeinheit (410), die an der Transportstrecke (157) zwischen der Waschstation (200) und der Arbeitsstation (300) derart positioniert oder positionierbar ist, dass ein Näpfchen (172) im Erfassungsbereich der Messeinheit (410) liegt, wenn sich die Mikroplatte (170) in einer Messposition zwischen der Waschstation (200) und der Arbeitsstation (300) befindet,
wobei die Messeinheit aufweist
- eine Messlichtquelleneinheit (420) zum Einstrahlen eines Messlichtstrahls (425) mit infrarotem Messlicht von einer Lichteintrittsseite derart, dass das Messlicht eine Querschnittsfläche eines Näpfchens (172) innerhalb eines Messzeitintervalls im Wesentlichen vollständig ausleuchtet; und
- einen für das Messlicht sensitiven Detektor (430) zum Erfassen von Messlicht nach Wechselwirkung mit dem Näpfchen und darin aufgenommener Flüssigkeit und zur Abgabe von Detektorsignalen an eine Auswerteeinrichtung, und wobei
- die Flüssigkeitsmengen-Messeinrichtung (400) eine Vielzahl von Messeinheiten (410) aufweist, die an der Transportstrecke (157) zwischen der Waschstation (200) und der Arbeitsstation (300) derart angeordnet sind, dass mehrere der Näpfchen gleichzeitig im Erfassungsbereich jeweils einer Messeinheit (410) liegen, wenn sich die Mikroplatte in einer Messposition zwischen der Waschstation und der Arbeitsstation befindet.

2. Vorrichtung nach Anspruch 1, **dadurch gekennzeichnet, dass** eine Messlichtquelleneinheit (420) wenigstens eine Infrarot-Laserdiode als Messlichtquelle aufweist, wobei vorzugsweise die Infrarot-Laserdiode im Pulsbetrieb betreibbar ist.

3. Vorrichtung nach Anspruch 1 oder 2, **dadurch gekennzeichnet, dass** eine Messlichtquelleneinheit (420) eine Messlichtquelle und eine der Messlichtquelle nachgeschaltete Strahlformungsoptik zur Erzeugung eines im Wesentlichen kollimierten Messstrahls (425) oder eines divergenten Messstrahls aufweist, wobei der Messstrahl (425) im Bereich einer Probenebene im Wesentlichen einen Querschnitt aufweist, welche dem Querschnitt eines Näpfchens im Bodenbereich (173) entspricht.

4. Vorrichtung nach Anspruch 1 oder 2, **dadurch gekennzeichnet, dass** eine Messlichtquelleneinheit (420) eine Messlichtquelle und eine der Messlichtquelle nachgeschaltete Strahlformungsoptik zur Erzeugung eines linienförmigen Messstrahls aufweist, der im Bereich einer Probenebene in einer Längsrichtung eine Länge aufweist, welche im Wesentlichen dem Durchmesser eines Näpfchens im Bodenbereich (173) entspricht, wobei die Messlichtquelleneinheit und die Mikroplatte während eines Messzeitintervall in einer Richtung quer zur Längsrichtung des Messstrahls relativ zueinander bewegbar sind.

5. Vorrichtung nach einem der vorhergehenden Ansprüche, **dadurch gekennzeichnet, dass** eine Reihe gleichartiger Messeinheiten vorgesehen ist, deren Anzahl der Anzahl von Näpfchen in einer quer zur Transportstrecke laufenden Spalte von Näpfchen einer Mikroplatte entspricht, so dass innerhalb einer Messoperation alle Näpfchen einer Spalte zeitgleich messbar sind.

6. Vorrichtung nach Anspruch 5, **dadurch gekennzeichnet, dass** mehrere Messeinheiten, insbesondere alle Messeinheiten einer Reihe von Messeinheiten, eine gemeinsame Messlichtquelleneinheit aufweisen, wobei Messlicht der Messlichtquelleneinheit auf mehrere Lichtleiter aufgeteilt wird und von Lichtaustrittsflächen der Lichtleiter emittiertes Messlicht jeweils durch eine nachgeschaltete Strahlformungsoptik in ein Näpfchen führbar ist.

7. Vorrichtung nach einem der vorhergehenden Ansprüche, **dadurch gekennzeichnet, dass** eine Messeinheit oder mehrere Messeinheiten an einer verfahrbaren Einheit angebracht sind, die motorisch relativ zur Mikroplatte in Richtung einer Spalte der Mikroplatte bewegbar ist, während sich die Mikroplatte in der Messposition befindet.

8. Vorrichtung nach einem der vorhergehenden Ansprüche, **dadurch gekennzeichnet, dass** der Detektor eine Messdiode aufweist, die gleichzeitig als Referenzdiode und/oder oder Stabilisierungsdiode für die Messlichtquelleneinheit geschaltet ist.

9. Vorrichtung nach einem der vorhergehenden Ansprüche, **dadurch gekennzeichnet, dass** der Detektor (430) auf einer der Lichteintrittsseite gegenüberliegenden Seite einer Probenebene (140) liegt, so dass durch den Detektor Messlicht nach Durchtritt durch einen Bodenbereich (173) des Näpfchens (172) und einer eventuellen Wechselwirkung mit einem Näpfcheninhalt detektierbar ist.

10. Vorrichtung nach einem der vorhergehenden Ansprüche, **dadurch gekennzeichnet, dass** die Einrichtungen zum Transportieren einer Mikroplatte entlang der Transportstrecke (157) einen Transportschlitten aufweisen, der vorzugsweise Bohrungen und/oder Öffnungen aufweist, die eine Referenzmessung der Messlichtquelle, insbesondere der Infrarot-Laserdiode, zur Messdiode hin ohne die Mikroplatte ermöglicht

11. Vorrichtung nach einem der vorhergehenden Ansprüche, **dadurch gekennzeichnet, dass** die Arbeitsstation (300) wenigstens eine Mikroplattenstapelvorrichtung (310, 320) aufweist, vorzugsweise wenigstens eine erste Mikroplattenstapelvorrichtung (310) zur Aufnahme von der Waschstation zuführbaren Mikroplatten und wenigstens eine zweite Mikroplattenstapelvorrichtung (320) zur Aufnahme von von der Waschstation zurückgeführten Mikroplatten.

12. Vorrichtung nach einem der vorhergehenden Ansprüche, **dadurch gekennzeichnet, dass** die Arbeitsstation (300) wenigstens eine Dispensiervorrichtung (500) zur Abgabe eines flüssigen Mediums in Näpfchen der Mikroplatte umfasst, wobei die Dispensiervorrichtung (500) entlang der Transportstrecke zwischen der Waschstation und einer Mikroplattenstapelvorrichtung angeordnet ist.

13. Verfahren zum Reinigen einer Mikroplatte mit folgenden Schritten:
Transportieren der Mikroplatte zu einer Waschstation;
Dispensieren von Reinigungsflüssigkeit in Näpfchen der Mikroplatte und Absaugen von Reinigungsflüssigkeit aus den Näpfchen nach Wechselwirkung der Reinigungsflüssigkeit mit dem jeweiligen Näpfchen;
Transportieren der Mikroplatte entlang einer Transportstrecke in eine Messposition, derart, dass mehrere Näpfchen gleichzeitig in einem Erfassungsbereich jeweils einer einem Näpfchen zugeordneten Messeinheit angeordnet ist; wobei die Messeinheit aufweist:
- eine Messlichtquelleneinheit (420) zum Einstrahlen eines Messlichtstrahls (425) mit infrarotem Messlicht von einer Lichteintrittsseite eines Näpfchens derart, dass das Messlicht eine Querschnittsfläche des Näpfchens (172) innerhalb eines Messzeitintervalls im Wesentlichen vollständig ausleuchtet; und
- einen für das Messlicht sensitiven Detektor (430) zum Erfassen von Messlicht nach Wechselwirkung mit dem Näpfchen und darin aufgenommener Flüssigkeit und zur Abgabe von Detektorsignalen an eine Auswerteeinrichtung;
Einstrahlen eines Messlichtstrahls mit infrarotem Messlicht von einer Lichteintrittsseite eines Näpfchens derart, dass das Messlicht eine Querschnittsfläche des Näpfchens im Wesentlichen vollständig ausleuchtet;
Detektieren des Messlichts nach Wechselwirkung mit dem Näpfchen und gegebenenfalls darin aufgenommener Restflüssigkeit;
Auswertung von Detektorsignalen des Detektors zur quantitativen Bestimmung von Restflüssigkeit in dem Näpfchen;
Einleiten einer Aktion in Abhängigkeit vom Ergebnis der Auswertung, wobei mindestens eine Aktion der folgenden Gruppe eingeleitet wird:
Transportieren der Mikroplatte zu einen Plattenstapel mit Gutteilen, wenn eine Menge an Restflüssigkeit unterhalb eines vorgebbaren Grenzwerts oder auf dem Grenzwert liegt;
Abgeben einer Benutzerinformation zum Ergebnis der Auswertung, wobei vorzugsweise eine Fehlermeldung abgegeben wird, wenn eine Menge an Restflüssigkeit oberhalb eines vorgebbaren Grenzwerts liegt;
Ausschleusen der Mikroplatte aus der Vorrichtung und Abgeben eines Fehlersignals, wenn bei einer Mikroplatte wiederholt Fehlermeldungen auftreten;
Versetzen der Vorrichtung in einen Fehlermodus.
